# EUROPÄISCHE PATENTSCHRIFT

(11) **EP 2 066 532 B1**
(45) Veröffentlichungstag und Bekanntmachung des Hinweises auf die Patenterteilung: **07.03.2012**
(21) Anmeldenummer: 06793601.3
(22) Anmeldetag: 18.09.2006
(51) Int. Cl.: B60R 16/06

(54) **VERBINDUNGSSYSTEM MIT EINEM MASSEBAND FÜR KRAFTFAHRZEUGE**
CONNECTING SYSTEM WITH GROUNDING STRIP FOR MOTOR VEHICLES
SYSTÈME DE CONNECTION AVEC BANDE DE MASSE POUR VÉHICULES

(43) Veröffentlichungstag der Anmeldung: 10.06.2009
(73) Patentinhaber: Auto-Kabel Managementgesellschaft mbH, 79688 Hausen i.W. (DE)
(72) Erfinder: DLUGOKINSKI, York, 85614 Eglharting (DE)
(74) Vertreter: Cohausz & Florack
(86) Internationale Anmeldenummer: PCT/EP2006/066462
(87) Internationale Veröffentlichungsnummer: WO 2008/034462

(56) Entgegenhaltungen:
- DE-A1- 10 233 650
- DE-A1- 19 745 869
- GB-A- 2 322 839
- JP-A- 2 152 304
- JP-A- 2006 183 625
- US-A- 2 216 363

## Beschreibung

Die Erfindung betrifft ein Verbindungssystem mit einem Massekabel für Kraftfahrzeuge, wobei das Massekabel zwischen einer ein elektrisches Masse-Bezugspotential aufweisenden Karosse und einem von der Karosse elektrisch isolierten Kraftfahrzeuganbauteil angeordnet ist.

Die Verbindung von elektrisch leitenden Bauteilen im Kraftfahrzeugbau ist notwendig, um alle an der Karosse angeordneten Bauteile auf ein selbes elektrisches Potential zu bringen. Es ist bekannt, dass die Karosse eines Kraftfahrzeugs stets mit der B-Leitung der Batterie verbunden ist. Elektrische Verbraucher greifen über die Karosserieteile das elektrische Masse-Bezugspotential ab und werden über eine getrennte Leitung mit dem Pluspol der Batterie verbunden.

Insbesondere bei beweglichen Teilen, als auch bei an die Karosse angeklebten Bauteilen ist es notwendig, diese Bauteile mit der Karosse elektrisch zu verbinden. Bevorzugt bei Türen, Heckklappen, Motorhauben, und geklebten Dächern wird herkömmlicherweise die Verbindung über ein Massekabel hergestellt. In der DE 698 21 135 T2 (EP-B-103409131) ist eine Verbindung zwischen einer Autotür und der restlichen Karosse dargestellt. Bei der beschriebenen Kontaktierung ist ein Karosserie-Kabelbaum mit einem ersten elektrischen Türverbindungsanschluss mittels eines Karosserie-Kabelbaumverbindungsanschlusses und eines biegfähigen balgartigen Schlauches verbunden. Der Verbindungsanschluss ist entweder an eine Vorderkante des Türverstärkungspaneels oder den elektrischen Türverbindungsanschluss geschraubt. Es hat sich jedoch gezeigt, dass die Verwendung von herkömmlichen Kabeln Nachteile bezüglich der Flexibilität hat. Außerdem weisen Rundkabel, insbesondere geflochtene Seile negative Eigenschaften hinsichtlich der elektromagnetischen Vertraglichkeit auf. Störspannungen können sich in diesen Verbindungen bilden.

Aus der gattungsbildenden GB 2 322 839 A ist bekannt, eine Türe eines Fahrzeugs mittels eines Erdungsstreifens mit der Fahrzeugkarosse zu verbinden.

Die JP 2 152 304 A zeigt die Verbindung einer in einer Glasscheibe integrierten Antenne mit einem Folienleiter.

Die DE 102 33 650 A1 zeigt die Verbindung eines Automobildachs mit dem Rest der Karosse mittels eines leitenden Verbindungselements.

Ausgehend von dem beschriebenen Stand der Technik lag der Erfindung die Aufgabe zugrunde, ein Verbindungssystem für einen Masseleiter zwischen einer Kraftfahrzeugkarosse und elektrisch nicht mit der Kraftfahrzeugkarosse verbundenen Teilen zur Verfügung zu stellen, welches besonders einfach handhabbar ist.

Diese Aufgabe wird erfindungsgemäß durch ein System nach Anspruch 1 gelöst. Bei der Montage ist es stets notwendig, dass diese fehlertolerant und zugig möglich ist. Durch die Verwendung einer Befestigungsklemme kann der Folienleiter leicht an der Aufnahme fixiert werden. Nachdem der Folienleiter mechanisch an der Aufnahme fixiert worden ist, kann dieser durch Verschraubung mit der Aufnahme kraftschlüssig verbunden werden. Über die Schraube kann eine elektrische Kontaktierung zwischen Folienleiter und Aufnahme ermöglicht werden.

Es hat sich gezeigt, dass der Folienleiter besonders gut in der Aufnahme gehalten wird, falls die Aufnahme eine zumindest ein Ende des Folienleiters aufnehmende Vertiefung aufweist. Diese Vertiefung kann dabei der Form des Folienleiters entsprechen, so dass der Folienleiter bereits durch die Vertiefung an der Aufnahme gehalten wird. Die Vertiefung ist bevorzugt der Starke des Folienleiters angepasst, so dass der in der Vertiefung eingelegte Folienleiter flächig mit der Oberflache der Aufnahme abschließt.

Eine besonders gute Fixierung des Folienleiters an der Aufnahme wird dadurch gewährleistet, dass die Positioniernase in der Vertiefung angeordnet ist.

Bei der Montage wird eine Fixierung des Folienleiters besonders einfach dadurch gewährleistet, dass die Befestigungsklemme einen zumindest teilweise an ihrer Innenseite umlaufenden, mit einer an der äußeren Umfangsflache der Aufnahme angeordneten Nut korrespondierenden Kragen aufweist, derart, dass der Kragen zum Verrasten der Befestigungsklemme in der Nut verrastet. Bei der Montage muss die Befestigungsklemme lediglich auf die Aufnahme aufgedrückt werden, woraufhin die Befestigungsklemme in der Aufnahme verrastet. Durch die Verrastung wird der in der Aufnahme angeordnete Folienleiter in seiner Position gehalten. Danach kann der Folienleiter durch eine Schraube kraftschlüssig mit der Aufnahme verbunden werden.

Wie bereits zuvor erwähnt, befestigt die Befestigungsklemme den Folienleiter in der Aufnahme, und die Positioniernase nimmt ein durch Verschrauben des Folienleiters eingebrachtes Drehmoment auf. Durch die Positioniernase wird verhindert, dass sich der Folienleiter bei der Verschraubung verwindet oder verdreht und evtl. beschädigt wird.

Die Verwendung eines Folienleiters als Masseverbindung stellt eine hohe Flexibilität um eine Drehachse zwischen Karosse und beweglichem Teil zur Verfugung. Durch die Verwendung eines Folienleiters ergibt sich im Vergleich zu einem Rundleiter eine verbesserte elektromagnetische Verträglichkeit. Störspannungen werden durch den Folienleiter besser abgeleitet als durch einen Rundleiter. Die Verwendung des Folienleiters ermöglicht eine Masseverbindung zwischen Karosse und Anbauteil mit geringsten Bauraumanforderungen. Im Gegensatz zu Rundleitern lässt sich ein Folienleiter in kleine Spalte einlegen, so dass keine gesonderten Bauraumanforderungen für die Masseverbindung notwendig sind.

Bevorzugt ist die Verwendung eines Folienleiters mit einer Starke zwischen 0,05 mm und 0,2 mm. Die Querschnittsflache des Folienleiters muss ausreichend groß sein, um eine geforderte Stromtragfähigkeit zur Verfugung zu stellen. Entsprechend der Breite des Folienleiters kann dessen Stärke bestimmt werden.

Besonders bevorzugt ist der Folienleiter aus Aluminium oder Kupferfolien gebildet. Sowohl Aluminium als auch Kupferfolie sind einfach in der Handhabung und kostengünstig. Bei der Verarbeitung von Aluminium oder Kupferfolie ist es vorteilhaft, wenn die Ausgangsmaterialien auf Coils zur Verarbeitung angeliefert werden und von den Coils bei der Verarbeitung abgerollt werden. Dies ermöglicht eine kontinuierliche, kostengünstige Produktion.

Zum Schutz des Folienleiters vor Korrosion wird vorgeschlagen, dass die Seele zinnplattiert ist. Bevorzugt ist die Seele aus Kupfer oder Aluminiumfolie gebildet und zinnplattiert.

Ein Korrosionsschutz wird gemäß eines vorteilhaften Ausführungsbeispiels dadurch erreicht, dass die Seele des Folienleiters eloxiert ist. Ebenfalls bevorzugt ist, dass die Seele des Folienleiters mit einem Kunststoff beschichtet ist. Eine solche Beschichtung kann bevorzugt mittels Kaschieren oder Laminieren erfolgen. Bei einer Kunststoffbeschichtung eignen sich insbesondere PET oder PI als Beschichtungsmaterialien .

Gemäß eines vorteilhaften Ausführungsbeispiels wird vorgeschlagen, dass der Folienleiter ein aus Aluminium gebildetes Kraftfahrzeuganbauteil mit einer aus Stahl gebildeten Karosse elektrisch verbindet. Bei der Verwendung von aus Aluminium gebildeten Kraftfahrzeuganbauteilen kommt es häufig vor, dass auf der Oberfläche des Kraftfahrzeuganbauteils eine Aluminiumoxidschicht gebildet ist, bevor dieses mit der Karosse verbaut wurde. Die Aluminiumoxidschicht verhindert jedoch eine gute elektrische Kontaktierung zwischen Anbauteil und Karosse. Falls das Anbauteil mit Masse-Bezugspotential elektrisch verbunden werden muss, wird vorgeschlagen, dies mittels des Folienleiters zu gewährleisten. Für die Kontaktierung des Folienleiters mit der Karosse als auch dem Fahrzeuganbauteil eignet sich beispielsweise Ultraschallschweißen.

Besonders bevorzugt eignen sich Folienleiter für die Kontaktierung eines schwenkbaren Kraftfahrzeuganbauteils mit der Karosse. Wie zuvor erwähnt, zeichnet sich der Folienleiter durch eine hohe Flexibilität entlang einer Drehachse aus. Ferner wird ein nur geringer Bauraum benötigt, um eine elektrische Kontaktierung zwischen schwenkbarem Kraftfahrzeuganbauteil und Karosse zu ermöglichen.

Besonders bevorzugt ist die Verwendung eines Folienleiters bei der Kontaktierung einer Türe, einer Heckklappe, einer Motorhaube, oder eines verklebten Daches mit der Karosse. Bei der Verklebung von Kraftfahrzeuganbauteilen mit der Karosse muss ebenfalls eine gesonderte elektrische Verbindung hergestellt werden, da entlang der Klebestelle die verklebten Bauteile gegeneinander isoliert sind.

Eine besonders einfache Montage wird dadurch ermöglicht, dass der Folienleiter an zumindest einem Ende eine erste, eine Schraube aufnehmende Öffnung und eine zweite, eine Positioniernase aufnehmende Öffnung aufweist, derart, dass beim Verschrauben des Folienleiters mit der Karosse oder dem Kraftfahrzeuganbauteil der Flachleiter durch die Positioniernase in einer Verschraubposition gehalten wird und dass die Schraube durch die erste Öffnung in ein korrespondierendes Gewinde eingreift. Bei der Verschraubung des Folienleiters kann es dazu kommen, dass in diesen Drehmomente eingebracht werden. Durch die Verrastung des Folienleiters in einer Positioniernase wird durch diese das Drehmoment aufgenommen und der Folienleiter in der Verschraubposition gehalten. Ein Verdrehen oder Verwinden des Folienleiters wird durch die Positioniernase verhindert. Dies vereinfacht die Montage und verringert die Fehlerwahrscheinlichkeit .

Die Verwendung eines Folienleiters als Massekabel für Kraftfahrzeuge ermöglicht eine flexible, kostengünstige und wenig störanfällige Kontaktierung von Kraftfahrzeuganbauteilen mit elektrischem Masse-Bezugspotential. Nachfolgend wird die Erfindung anhand einer Ausführungsbeispiele zeigenden Zeichnung naher erläutert. In der Zeichnung zeigen:
Fig. 1a einen ersten Querschnitt eines erfindungsgemäßen Folienleiters;
Fig. 1b einen zweiten Querschnitt eines erfindungsgemäßen Folienleiters;
Fig. 2 eine Ansicht einer Verbindung zwischen Scharnierteilen eines Kraftfahrzeugs;
Fig. 3 eine weitere Ansicht einer Verwendung von Scharnierteilen;
Fig. 4 eine Ansicht einer Aufnahme, eines Folienleiters und einer Befestigungsklemme.

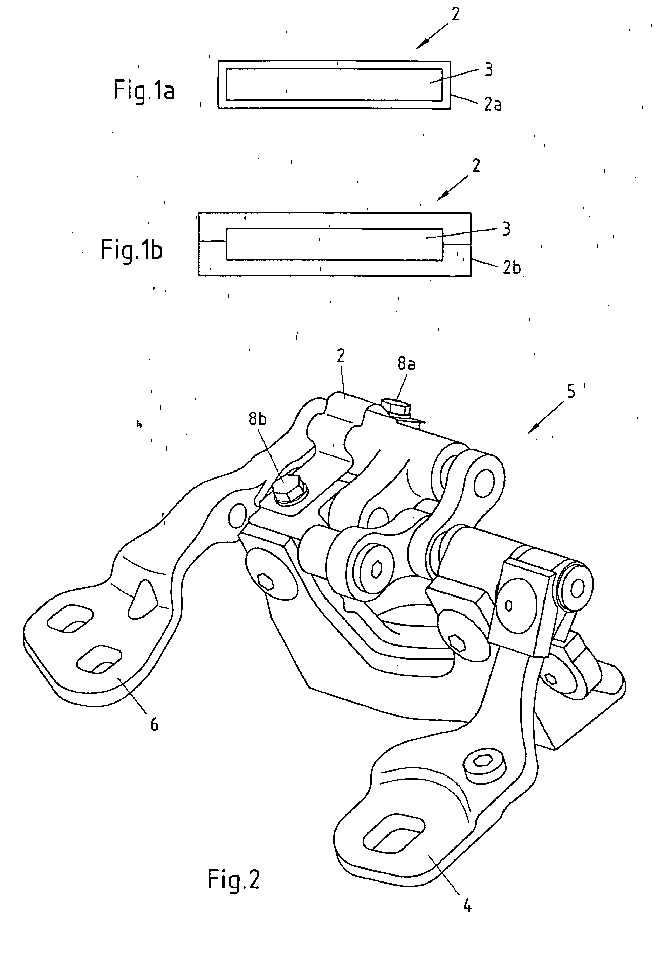

Fig. 1a zeigt einen ersten Querschnitt eines erfindungsgemäßen Folienleiters 2. Die Seele 3 des Folienleiters 2 ist aus Aluminium. Die Oberfläche der Seele 3 ist mit einer Aluminiumoxidschicht 2a überzogen. Die Aluminiumoxidschicht 2a wird mittels Eloxieren auf die Seele 3 aufgebracht. Die Aluminiumoxidschicht 2a stellt eine Isolation der Seele 3 gegenüber anderen Bauteilen dar. Neben der Aluminiumoxidschicht 2a ist es ebenfalls möglich, eine Kunststoffschicht, bzw. PET oder PI aufzubringen. Dies ist in Fig. 1b gezeigt. Zu erkennen ist, dass die Seele 3 des Folienleiters 2 mittels einer Kunststofffolie 2b laminiert ist. Die Kunststofffolie 2b kann auflaminiert oder aufkaschiert werden. Die Kunststofffolie 2b stellt eine Isolation der Seele 3 dar. Zur Verbesserung der mechanischen Eigenschaften des Folienleiters 2 wird auch vorgeschlagen, die Seele 3 mittels Zinnplattieren mit einer Zinkschicht zu überziehen.

Fig. 2 zeigt eine Ansicht eines Türscharniers 5. Das Türscharnier 5 ist über Anschlussteile 4 und 6 mit der Karosse, bzw. einer Türe kraftschlüssig verbunden. Die Anschlussteile 4, 6 ermöglichen ein Offnen bzw. Schließen der Türe. Das Scharnier 5 hat den Nachteil, dass eine elektrische Kontaktierung zwischen dem Anschlussteil 4 und dem Anschlussteil 6 nicht gewährleistet ist. Durch Schmiermittel und Kunststoffbauteile kann es dazu kommen, dass das Anschlussteil 4 elektrisch gegenüber dem Anschlussteil 6 isoliert ist. Aus diesem Grunde wird zwischen dem Anschlussteil 4 und dem Anschlussteil 6 ein Folienleiter 2 angeordnet.

Dieser Folienleiter 2 ist mittels Schrauben 8a, 8b jeweils an dem Anschlussteil 6 und dem Anschlussteil 4 verschraubt. über die Schrauben 8a, 8b wird der Folienleiter 2 elektrisch mit den Anschlussteilen 4, 6 kontaktiert. Die Anschlussteile 4, 6 sind über die Schrauben 8 und den Folienleiter 2 elektrisch miteinander kontaktiert.

Wie zu erkennen ist, benötigt der Folienleiter 2 nur einen geringen Bauraum, so dass die elektrische Kontaktierung unmittelbar am Scharnier 5 angeordnet sein kann. Bei herkömmlichen Verbindungen mit Rundleitern ist aufgrund der geringeren Flexibilität eine Kontaktierung nur zwischen Karosse und Türe möglich. Die Kontaktierung unmittelbar im Scharnier 5 war mit herkömmlichen Rundleitern nicht möglich, da diese nicht die notwendige Flexibilität aufwiesen und in ihrem Krümmungsradius stärker eingeschränkt waren, als es erfindungsgemäße Folienleiter sind.

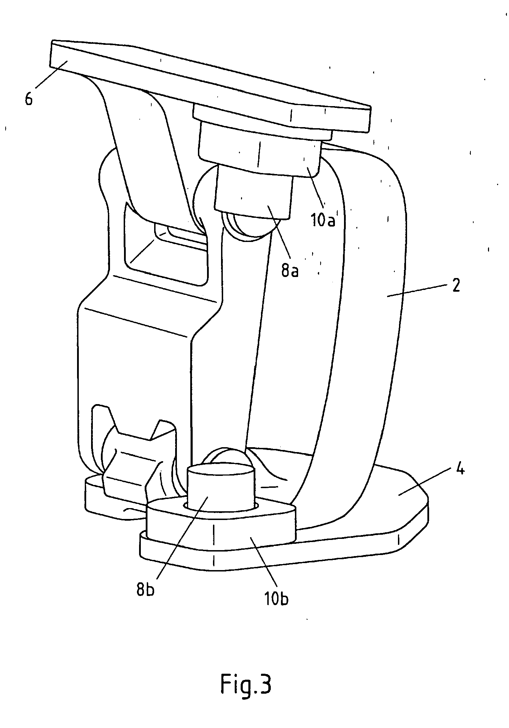

Fig. 3 zeigt das Scharnier 5 im eingebauten Zustand. Der Folienleiter 2 ist in der in Fig. 3 dargestellten Ausführungsform in Aufnahmen an den Anschlussteilen 4 und 6 angeordnet. Der Folienleiter 2 wird mittels Befestigungsklemmen 10 in den Aufnahmen gehalten und über die Schrauben 8 mit den Anschlussteilen 4, 6 verschraubt.

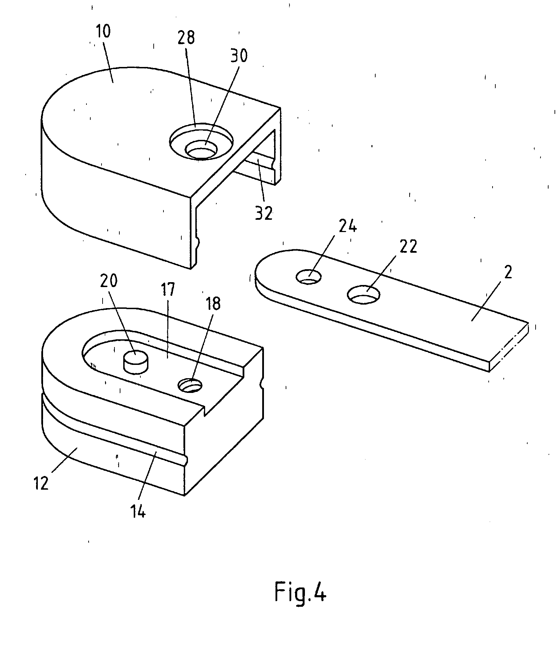

Fig. 4 zeigt eine Ansicht einer Aufnahme 12 und einer Befestigungsklemme 10. Die Aufnahme 12 weist eine Positioniernase 20, eine Bohrung 18 mit Innengewinde, eine Vertiefung 17 und eine Nut 14 auf.

Weiterhin dargestellt ist ein Folienleiter 2 mit einer ersten Öffnung 24 zur Aufnahme der Positioniernase 20 und einer zweiten Öffnung 22, welche mit der Bohrung 18 korrespondiert, und in welche eine Schraube 8 aufgenommen werden kann. Schließlich ist eine Befestigungsklemme 10 dargestellt, welche eine Bohrung 30, mit einer Vertiefung 28 zur Aufnahme eines Schraubenkopfes aufweist. Ferner weist die Befestigungsklemme 10 ein entlang ihres Innenrandes umlaufenden Kragen 32 auf.

Zur Montage des Folienleiters 2 wird dieser in die Vertiefung 17 eingelegt. Die Vertiefung 17 ist dergestalt, dass der Folienleiter 2 bündig mit der Oberflache der Aufnahme 12 abschließt. Ist der Folienleiter 2 in die Vertiefung 17 eingelegt, greift die Positioniernase 20 in die erste Öffnung 24 ein. Die zweite Öffnung 22 liegt unmittelbar über der Bohrung 18. Nachdem der Folienleiter 2 in die Vertiefung 17 eingelegt worden ist, wird die Befestigungsklemme 10 über die Aufnahme 12 gedruckt. Dabei rastet der Kragen 32 in die Nut 14 ein. Der Kragen 32 und die Nut 14 sind so angeordnet, dass die Befestigungsklemme 10 in der Aufnahme 12 derart einrastet, dass der Folienleiter 2 in die Vertiefung 17 gedrückt wird. Die Bohrung 30 in der Befestigungsklemme 10 ist derart angeordnet, dass sie, nachdem die Befestigungsklemme 10 in der Aufnahme 12 verrastet ist, unmittelbar über der Bohrung und der zweiten Öffnung 22 liegt. Durch die verrastete Befestigungsklemme 10 wird der Folienleiter 2 fest in der Aufnahme 12 gehalten. Danach wird der Folienleiter 2 mit einer Schraube, welche durch die Öffnungen 30, 22 in die Bohrung 10 hineinragt, verschraubt. Beim Verschrauben wird durch die Auflage der Schraube in der vertiefung 28 verhindert, dass ein Drehmoment auf den Folienleiter 2 wirkt. Für den Fall, dass dennoch ein Drehmoment auf den Folienleiter 2 wirkt, wird dieses durch die Positioniernase 20 aufgenommen, und ein Verdrehen oder ein Verwinden des Folienleiters 2 beim verschrauben verhindert.

Das erfindungsgemäße Verbindungssystem ermöglicht eine elektrische Kontaktierung von verschiedenen Bauteilen eines Kraftfahrzeugs mit geringem Montageaufwand. Die elektrische Verbindung ist flexibel, und wenig störanfällig. Der benötigte Bauraum ist klein, so dass die Kontaktierung auf kleinstem Raum erfolgen kann.

## Patentansprüche

1. Verbindungssystem mit einem Massekabel, wobei das Massekabel zwischen einer ein elektrisches Masse-Bezugspotential aufweisenden Karosse und einem von der Karosse elektrisch isolierten Kraftfahrzeuganbauteil (6) angeordnet ist und ein Folienleiter (2) ist, und einem Aufnahmeteil (12) sowie einer Befestigungsklemme (10), **dadurch gekennzeichnet, dass** das den Folienleiter (2) aufnehmende Aufnahmeteil (12) eine Positioniernase (20) hat, wobei die Positioniernase (20) in eine Öffnung (24) des Folienleiters (2) eingreift, die Befestigungsklemme (10) den Folienleiter (2) an die Positioniernase (20) drückt und die Befestigungsklemme (10) mit dem Aufnahmeteil (12) verrastet, wobei die Befestigungsklemme (10) eine eine Schraube (8) aufnehmende Öffnung (30) aufweist .

2. Verbindungssystem nach Anspruch 1, **dadurch gekennzeichnet, dass** die Aufnahme (12) eine zumindest ein Ende des Folienleiters (2) aufnehmende Vertiefung (17) aufweist.

3. Verbindungssystem nach Anspruch 2, **dadurch gekennzeichnet, dass** die Positioniernase (20) in der Vertiefung (17) angeordnet ist.

4. Verbindungssystem nach einem der vorangehenden Ansprüche, **dadurch gekennzeichnet, dass** die Befestigungsklemme (10) einen zumindest teilweise an ihrer Innenseite umlaufenden, mit einer an der äusseren Umfangsfläche der Aufnahme (12) angeordneten Nut (14) korrespondierenden Kragen (32) aufweist, derart, dass der Kragen (32) zum Verrasten der Befestigungsklemme (10) in der Nut (14) verrastet.

5. Verbindungssystem nach einem der vorangehenden Ansprüche, **dadurch gekennzeichnet, dass** die Befestigungsklemme (10) den Folienleiter (2) derart in der Aufnahme (12) befestigt, dass die Positioniernase (20) ein durch Verschrauben des Folienleiters (2) eingebrachtes Drehmoment aufnimmt

6. Verbindungssystem nach einem der vorangehenden Ansprüche, **dadurch gekennzeichnet, dass** der Folienleiter (2) eine Stärke von 0,05 mm - 0,2 mm hat.

7. Verbindungssystem nach einem der vorangehenden Ansprüche, dadurch gekenntzeichnet, dass eine Seele (3) des Folienleiters (2) aus Aluminium oder Kupferfolie gebildet ist.

8. Verbindungssystem nach Anspruch 7, **dadurch gekennzeichnet, dass** die Seele (3) des Folienleiters (2) zinnplattiert ist.

9. Verbindungssystem nach einem der Ansprüche 7 oder 8, **dadurch gekennzeichnet, dass** die Seele (3) des Folienleiters (2) eloxiert ist.

10. Verbindungssystem nach einem der Ansprüche 7 bis 9, **dadurch gekennzeichnet, dass** die Seele (3) des Folienleiters (2) mit einem Kunststoff (25) beschichtet ist.

11. Verbindungssystem nach Anspruch 10, **dadurch gekennzeichnet, dass** der Kunststoff (25) PET oder PI ist.

12. Verbindungssystem nach einem der Ansprüche 10 oder 11, **dadurch gekennzeichnet, dass** die Kunststoffbeschichtung (25) mittels Kaschieren oder Laminieren aufgebracht ist.

13. Verbindungssystem nach einem der vorangehenden Ansprüche, **dadurch gekennzeichnet, dass** der Folienleiter (2) ein aus Aluminium gebildetes Kraftfahrzeuganbauteil (6) mit einer aus Stahl gebildeten Karosse elektrisch verbindet .

14. Verbindungssystem nach einem der vorangehenden Ansprüche, **dadurch gekennzeichnet, dass** der Folienleiter (2) ein schwenkbares Kraftfahrzeuganbauteil (6) mit der Karosse verbindet.

15. Verbindungssystem nach einem der Ansprüche 1-13, **dadurch gekennzeichnet, dass** der Folienleiter (2) ein Kraftfahrzeuganbauteil aus der Gruppe:
Türe;
Heckklappe;
Motorhaube; verklebtes Dach,
mit der Karosse elektrisch verbindet.

## Claims

1. Connecting system with a ground cable, wherein the ground cable is located between a vehicle body having electrical ground reference potential and a vehicle body attachment part (6), which is electrically insulated from the body, and is a foil conductor (2), and a seating (12) as well as a fixing clip (10), **characterized in that** the seating (12) for receiving the foil conductor (2) has a positioning lug (20), wherein the positioning lug (20) engages in an opening (24) of the foil conductor (2), the fixing clip (10) presses the foil conductor (2) onto the positioning lug (20) and the fixing clip (10) snaps into the seating (12), wherein the fixing clip (10) is an opening (30) for receiving a screw.

2. Connecting system of claim 1, **characterized in that** the seating has a cavity (17) for taking up at least an end of the foil conductor (2).

3. Connecting system of claim 2, **characterized in that** the positioning lug (20) is arranged within the cavity (17).

4. Connecting system of any of the preceding claims, **characterized in that** the fixing clip (10) has a corresponding collar (32) running at least partly around its inside, with a groove (14) arranged on the outer peripheral face of the seating (12), so that the collar (32) snaps into the groove (14) in order to lock the fixing clip (10).

5. Connecting system of any one of the preceding claims, **characterized in that** the fixing clip (10) secures the foil conductor (2) in the seating (12) so that the positioning lug (20) takes up any torque generated while the foil conductor (2) is being bolted on.

6. Connecting system of any one of the preceding claims, **characterized in that** the foil conductor (2) has a thickness of 0.05 mm - 0.2 mm.

7. Connecting system of any one of the preceding claims, **characterized in that** a core (3) of the foil conductor (2) is made of aluminium or copper foil.

8. Connecting system of claim 7, **characterized in that** the core (3) of the foil conductor (2) is tin-plated.

9. Connecting system of claim 7 or 8, **characterized in that** the core (3) of the foil conductor (2) is anodized.

10. Connecting system of any of claims 7 - 9, **characterized in that** the core (3) of the foil conductor (2) is coated with a plastic (25).

11. Connecting system of claim 10, **characterized in that** the plastic is PET or PI.

12. Connecting system of claim 10 or 11, **characterized in that** the plastic coating (25) is applied by means of over-coating or lamination.

13. Connecting system of any one of the preceding claims, **characterized in that** the foil conductor (2) electrically connects a vehicle attachment part (6) made of aluminium to a vehicle body made of steel.

14. Connecting system of any one of the preceding claims, **characterized in that** the foil conductor (2) connects a pivoting vehicle attachment part (6) to the body.

15. Connecting system of any one of claims 1 - 13, **characterized in that** the foil conductor (2) electrically connects a vehicle attachment part comprised of the group:
door;
tailgate;
bonnet;
bonded roof,
to the body.

## Revendications

1. Système de connexion avec un câble de masse, sachant que le câble de masse est disposé entre une carrosserie, qui présente un potentiel électrique de masse de référence, et un élément rapporté du véhicule automobile (6) électriquement isolé de la carrosserie, et est un conducteur plat, et avec un réceptacle (12), ainsi qu'avec un organe de fixation (10), **caractérisé en ce que** le réceptacle (12), recevant le conducteur plat (2), est doté d'un nez de positionnement (20), sachant que ledit nez de positionnement (20) s'engage dans une ouverture (24) du conducteur plat (2), que l'organe de fixation (10) presse le conducteur plat (2) contre le nez de positionnement (20), et que ledit organe de fixation (10) s'enclenche avec le réceptacle (12), l'organe de fixation (10) étant doté d'une ouverture (30), qui reçoit une vis (8).

2. Système de connexion selon la revendication 1, **caractérisé en ce que** le réceptacle (12) est doté d'une cavité (17), qui accueille au moins une extrémité du conducteur plat (2).

3. Système de connexion selon la revendication 2, **caractérisé en ce que** le nez de positionnement (20) est disposé dans la cavité (17).

4. Système de connexion selon l'une des revendications précédentes, **caractérisé en ce que** l'organe de fixation (10) est doté d'une collerette (32), qui, s'étendant au moins partiellement sur sa face intérieure, correspond à une rainure (14), disposée à la périphérie extérieure du réceptacle (12), de sorte que ladite collerette (32) s'enclenche dans la rainure (14) pour l'enclenchement de l'organe de fixation (10).

5. Système de connexion selon l'une des revendications précédentes, **caractérisé en ce que** l'organe de fixation (10) fixe le conducteur plat (2) dans le réceptacle (12) de sorte que le nez de positionnement (20) absorbe un couple de rotation engendré par le vissage du conducteur plat (2).

6. Système de connexion selon l'une des revendications précédentes, **caractérisé en ce que** le conducteur plat (2) présente une épaisseur de 0,05 mm à 0,2 mm.

7. Système de connexion selon l'une des revendications précédentes, **caractérisé en ce qu'**une âme (3) du conducteur plat (2) consiste en une feuille d'aluminium ou de cuivre.

8. Système de connexion selon la revendication 7, **caractérisé en ce que** l'âme (3) du conducteur plat (2) est étamée

9. Système de connexion selon revendication 7 ou 8, **caractérisé en ce que** l'âme (3) du conducteur plat (2) est anodisée.

10. Système de connexion selon l'une des revendications 7 à 9, **caractérisé en ce que** l'âme (3) du conducteur plat (2) est revêtue d'une matière synthétique (25).

11. Système de connexion selon la revendication 10, **caractérisé en ce que** la matière synthétique (25) est du PET ou du PI.

12. Système de connexion selon revendication 1ß ou 11, **caractérisé en ce que** le revêtement de matière synthétique (25) est appliqué par recouvrement ou par lamification.

13. Système de connexion selon l'une des revendications précédentes, **caractérisé en ce que** le conducteur plat (2) relie électriquement un élément rapporté d'un véhicule automobile, réalisé en aluminium, et une carrosserie en acier.

14. Système de connexion selon l'une des revendications précédentes, **caractérisé en ce que** le conducteur plat (2) relie électriquement un élément rapporté, pivotant de véhicule automobile à la carrosserie.

15. Système de connexion selon l'une des revendications 1 à 13, **caractérisé en ce que** le conducteur plat (2) relie électriquement un élément de véhicule automobile du groupe :
portes;
hayons;
capots; toit collé;
à la carrosserie.
